# EUROPEAN PATENT APPLICATION

(11) **EP 1 231 753 A1**
(43) Date of publication of application: **14.08.2002**
(21) Application number: 01103321.4
(22) Date of filing: 13.02.2001
(51) Int. Cl.: H04L 29/06

(54) **Method for the distribution of a real-time multi-client service**

(71) Applicant: TELEFONAKTIEBOLAGET LM ERICSSON (publ), 126 25 Stockholm (SE)
(72) Inventor: The designation of the inventor has not yet been filed
(74) Representative: Mohsler, Gabriele

(57) **Abstract**

The invention relates to the determination of service suppliers for the distribution of a service within a network. The invented method enables the selection of service suppliers according to a user defined policy. In the method the requirements for the service are determined, the characteristics of service suppliers and clients are determined, for each client the service suppliers are determined that can support the client, from these service suppliers a set of service suppliers is determined that can supply the service to all clients and finally for each client one service supplier is selected.

## Description

### Field of invention

The invention relates to a method for distributing a service within a network.

For example real-time services put strong demands on the maximum processing time. If a real time service is used by a plurality of clients the requirements regarding processing capacity often can be met by using a plurality of service suppliers, providing said service to the clients. A plurality of service suppliers can be implemented by using a computer network, that is an interconnected collection of autonomous computers.

### Description of prior art

Computer networks have the disadvantage, that they require certain knowledge from a user regarding for example the topology.
Due to the development of powerful microprocessors and high-speed computer networks, it has become feasible to set up distributed systems and put together computing systems composed of large numbers of CPUs connected by a high-speed network.
A distributed system is different from a computer network in that it provides some form of networking transparency such as access, location, replication and distribution transparency to the user. The user of a distributed system does not need to be aware of the multiple, possibly heterogeneous, processing platforms that are often placed at different locations. In effect, a distributed system is a software system built on top of a network. The software gives it a high degree of cohesiveness and transparency. Thus the distinction between a network and a distributed system lies with the software, especially the operating system, rather than with the hardware. Andrew S. Tanenbaum describes distributed systems in Distributed operating systems, second edition, published in 1995.

It is a problem to determine an optimised distribution of a service that is which service suppliers are selected for the provision of a service to a plurality of clients, within a network.

### Summary of the invention

This problem is solved advantageously by the method of claim 1 and the computer program of claim 12.

Further advantageous embodiments can be derived from the dependent claims 2 to 11.

Advantageous is the generation of a service distribution tree according to claim 2. This allows the reduction of the distribution problem to a problem that is much less complex.

Further advantageous is the use of a simplified service distribution tree according to claim 3. By using a simplified service distribution tree it becomes obvious how to select service suppliers according to requirements.

Especially advantageous is the choice between migration, replication, and partitioning of a service according to claim 4. This enables an operator to react more flexible on requirements on the distribution.

Further advantageous is the use of a predefined policy for the selection of service suppliers according to claim 5. This enables a consistence choice of service suppliers taking preferences into account.

Further advantageous is the determination of delays among service suppliers and of the maximum delay permitted according to claim 6. By this it is avoided that a distribution is selected that does not fulfil the requirements regarding delays.

Especially advantageous is the use of a central updating unit and the determination of delays between said updating unit and the service suppliers according to claim 7. A central updating unit is a simple way to guarantee consistent data and it reduces the complexity of the delay problem.

Further advantageous is the use of different service suppliers for the uplink and downlink connection according to claim 8. By this asymmetrical data amounts can be taken into account for the distribution of a service.

It is object of the invention to provide a method for determining a distribution of a service in a network.

A service can be distributed in three ways, by partitioning, by replication, and by migration.

A service or resource is partitioned when multiple service suppliers provide it, each of the service suppliers capable of handling a subset of the requests for service. Each request can be handled by one of the service suppliers implementing the service. A partitioning function maps requests to the subset of the nodes that can handle it. Communication between the different partitions may be needed to inform each other about updates.

A service or resource is replicated when it has multiple logically identical instances appearing on different service suppliers in a system. A request for access to the service can be directed to any of its instances. Several mechanisms are available to synchronise the different copies, also called replicas, and keep them consistent. Caching is seen as a special case of replication where at least parts of the service are copied closer to the client in order to reduce network transmission and access times. In case of replication a different service access point for example an IP address is used for each service instance. In case of caching the same service access point is used by the client. Several caching variants have been defined.

A service or resource is migrated when a central, independent service supplier takes care of all service requests and that service supplier transports itself between platforms. An example of a service migration is a mobile search agent that is sent out on the network. There is no relation with any other search agent, unless several agents have got the same or parts of the order and copies and overlaps should be filtered out etc. In that case replication or distribution would apply.

A service can be distributed in either way or by using a combination of them.
A service supplier can be for example a server, a proxy server, a sub-network like an intermediate network or an access network, or a network node.

A client is for example a user equipment, a mobile user equipment, a telecommunication device, an access network, or a personal computer.

An access network comprises at least one node, providing access for a client to telecommunication network. An example for an access networks is UTRAN (UMTS Terrestrial Radio Access Network),

An intermediate network is a network that connects an access network to a core network. Examples for intermediate networks are Internet based networks or trunk networks.

A core network provides telecommunication services and functionality to a user or client. Such services are for example telephony, data transmission, switching functions, and handling of users.

A service supplier has to meet certain requirements for the provision of the service to at least one client. The service, a client, the service provider or a network operator for example can define such requirements. The requirements are software requirements, hardware requirements or requirements on the communication for example among service suppliers or between a service supplier and a client. Examples for software requirements are for example an operating system or certain software products that are necessary to run the service. Hardware requirements are for example memory space or performance. Requirements regarding communication are for example jitter, bandwidth, security, reliability and delay. Security is the protection against unauthorised reading and modification of data. Reliability is the protection against erroneous data. The capabilities of a client or a service supplier to fulfil the requirements are called characteristics.

### Brief description of the drawings

The following figures show:
- Fig. 1:: depicts a distributed system as state of the art,
- Fig. 2:: depicts a distributed system structured by a service distribution tree,
- Fig. 3:: depicts a distributed system structured by service distribution tree with a schematic which service supplier can support which client,
- Fig. 4:: depicts a simplified service distribution tree, and
- Fig. 5:: depicts a table for the selection of service suppliers.

### Detailed description of embodiments

In the following the invention is described in more detail by means of embodiments and figures. Equal reference signs indicate equal elements. Not shown in the figures is the connection between the server Serv and the service supplier S1. The inventive method is described by the example of a service that is replicated but is not restricted to that. The mechanisms described below work for all three ways of distribution.

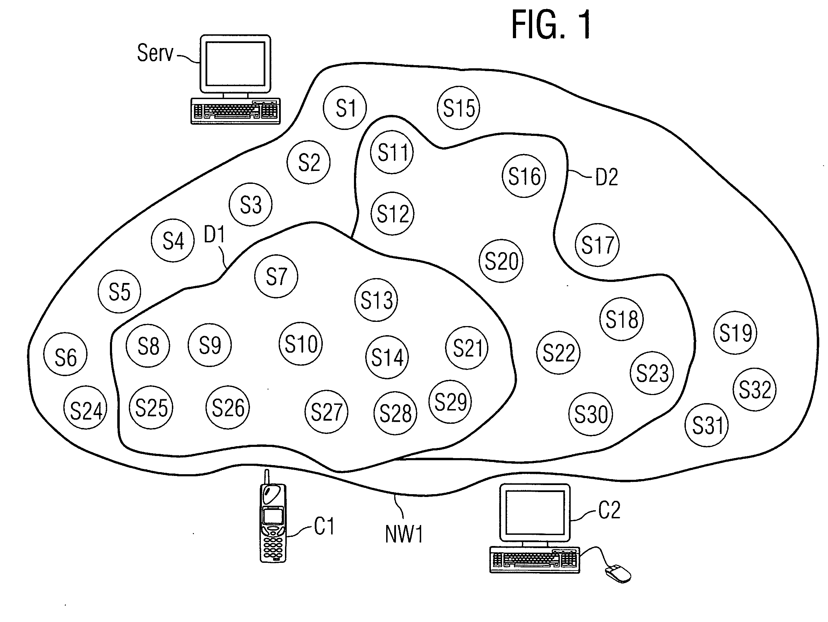

Figure 1 depicts a distributed system, comprising a server Serv, a plurality of service suppliers S1, S2, S3, S4, S5, S6, S7, S8, S9, S10, S11, S12, S13, S14, S15, S16, S17, S18, S19, S20, S21, S22, S33 and the clients C1 and C2. The service supplier in a first domain D1 can provide the service to the client C1; the service supplier in the second domain D2 can provide the service to the client C2. The other service suppliers are not capable of providing the service for example because the delay is too high. The service suppliers form a network NW1. It is also possible to regard the server Serv and or the clients C1 to C7 as part of the network.

In a first embodiment of the invention the requirements of a service are determined. In a preferred embodiment this is performed by a service transmitting its requirements for example as service classes.

The characteristics of service suppliers and clients are determined in a further step. In a preferred embodiment bandwidth brokers serving domains perform this. The bandwidth brokers collect information about the characteristics of service suppliers and clients within their domain.

In a further step it is determined for each client, which service suppliers can provide the service to it. In a preferred embodiment, the clients perform said determination.

A set of service suppliers is determined in a further step. The set of service suppliers comprises for each client at least one service supplier that is capable of providing a service to the client. It is object of the invention, to determine as few service suppliers as possible for the set.

In a last step, a service supplier is selected for each client.

In an embodiment of the invention, a service distribution tree SDT1 is used to structure the service suppliers.

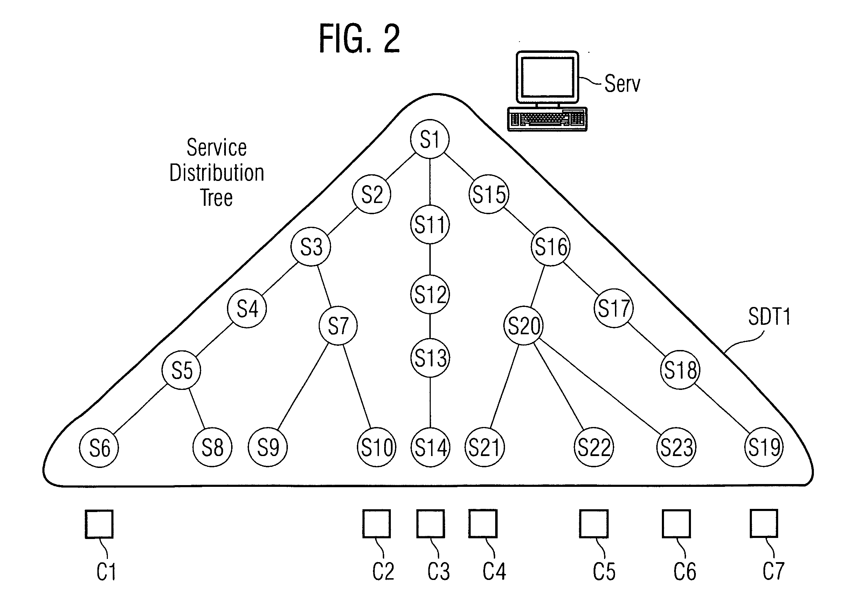

A service distribution tree is depicted in figure 2. It comprises all the elements of figure 1 and additionally a structure for the service suppliers and the clients C3, C4, C5, C6, and C7.

For each single client a good approximation places service instances on the shortest path between the server and the client. Although this is the shortest path between the client and the server, it is not necessarily the shortest path from the client to each service supplier on that shortest path. Considering the shortest path between the client and server reduces the problem space from a group to a line of service suppliers.

Since the service distribution has a single source, the server Serv, and multiple clients C1 and C2, and the single client service distribution is based on shortest paths, the delivery tree can be created by the Reverse Path Multicast (RPM) algorithm. A person skilled in the art knows this algorithm from Hersent, Gurle, and Petit, IP Telephony: Packet based multimedia communication systems published by Addison-Wesley in 2000.

Reverse Path Multicast builds source-based trees that span service suppliers with clients and service supplier along the shortest path to service supplier with clients. The resulting delivery tree is also known as Single-Source Shortest Paths from Manber's introduction to Algorithms published by Addison-Wesley in 1989.

Other delivery trees, such as minimum cost spanning trees or Steiner trees can also be applied.

The RPM distribution tree algorithm creates a tree of service suppliers according to a predefined metric or combination of metrics. Since there is a unique path from the server to each access network, loops are impossible. Because clients are not part of the network NW1, each path from the server will end in one client. Thus, the clients are leafs in the service distribution tree.

In an embodiment of the invention, different service trees based on different metrics like distance, costs, delay, and bandwidth are built for different requirements. In a further embodiment of the invention, service suppliers are selected if they belong to all of the different service distribution trees built for different metrics.

In a preferred embodiment of the invention, the determination of service suppliers is performed along the branches of a distribution tree.

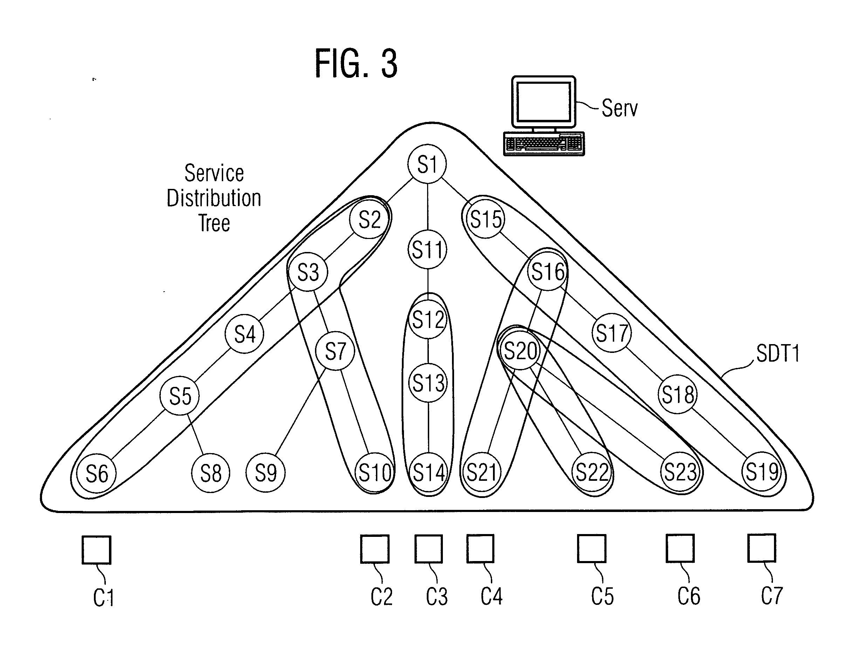

Figure 3 depicts a distribution tree with a schematic of which service supplier can support which client. It comprises all elements of figure 2. In addition to figure 2, it is depicted which service supplier can support which client by surrounding them with a closed line. For example the service suppliers S2, S3, S4, S5 and S6 can support client C1. Client C2 can be supported by the service suppliers S2, S3, S7, and S8; client C3 by service suppliers S12, S13, and S14; client C4 by service suppliers S16, S20, and S21; client C5 by service suppliers S20 and S22; client C6 by service suppliers S20 and S23 and client C7 by the service suppliers S15, S16, S17, S18, and S19.

In a preferred embodiment of the invention a simplified service distribution tree is used for determining the set of service suppliers.

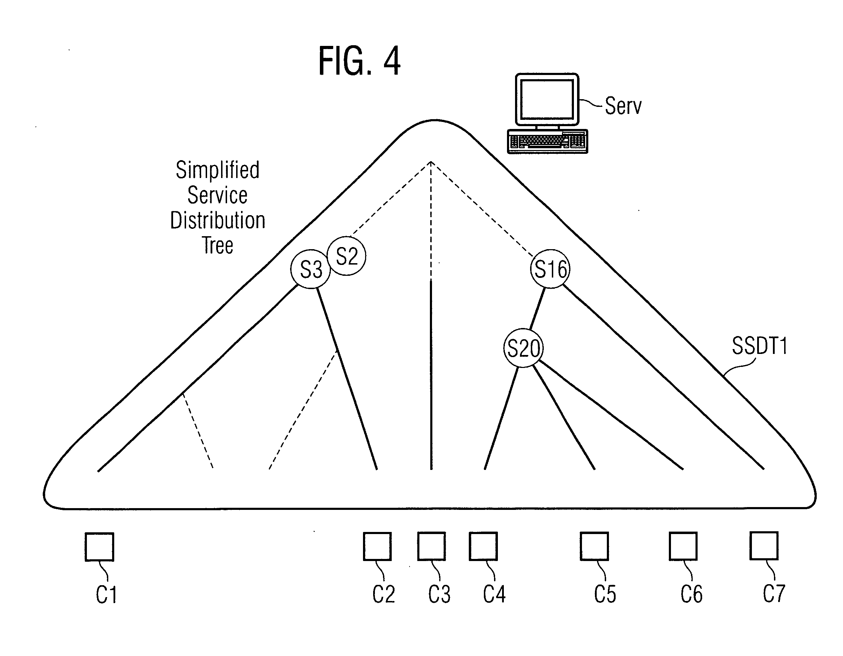

Figure 4 shows an example of a simplified service distribution tree SSDT1. The service distribution tree of figures 2 and 3 has been simplified by removing service suppliers that cannot serve at least two clients. That leaves the service suppliers S2, S3, S16 and S20. Connections that lead from one of the service suppliers to a client are depicted as thick lines. The other connections are depicted as broken lines. It is obvious from the simplified service distribution tree SSDT1, that either of the service suppliers S2 and S3 can be selected for supplying the service to the clients C1 and C2.

In a preferred embodiment of the invention, the selection of service suppliers for the set of service suppliers depends on a policy, defined by an operator, a service provider, a client or the service.

In a preferred embodiment of the invention, the selection of service suppliers from the set of service suppliers depends on a policy, defined by an operator, a service provider, a client or the service.

Policies can define for example a preference of service suppliers of a certain operator, a more centralised approach or a more distributed approach or a preference of a certain hardware or software.

A centralised approach is the preference of service suppliers that are closer to the server Serv. A distributed approach is the preference of service suppliers that are closer to a client.

A centralised approach has the advantage that updatings of data are reduced while a distributed approach is advantageous if transmission time between a client and a service supplier is crucial.

In a further embodiment the service suppliers are selected by using load-sharing mechanisms.

In another embodiment the service suppliers are selected at random.

Client C4 can be served by either S20 or S16. In the example S3 is selected for supplying C1 and C2 and S20 for C4 as the policy is to select the service supplier that is closer to the client. This decreases the delay between the client and the service supplier. In general leads the selection of a service supplier that is close to the client to an improved overall service quality.

In a further embodiment of the invention, bandwidth jitter and delay among service suppliers are determined before a decision is made depending on the result of said determination.

In another embodiment, the maximum delay that is permitted among service suppliers is determined and compared with the result of the determination of delays among service suppliers. The delay between two service suppliers can be derived for example by the routing protocols. The selection of service suppliers for the set of service suppliers depends on the result of said comparison.

In a preferred embodiment, one central update unit is selected. This update unit can be one of the service suppliers or a further device. The central update unit receives changes performed by clients, either from the clients or from service suppliers serving the clients, and updates data in the service suppliers. The delay between the service suppliers and the central update unit is determined. The delay is taken into account at the selection of service suppliers for the set of service suppliers. This can be a hard decision, for example if the delay between the service supplier and the central update unit exceeds the maximum permitted delay, or a soft decision if certain values for the delay are preferred.

In an embodiment of the invention, it is distinguished between an uplink and a downlink connection. An uplink connection is a connection from a client to a service supplier; a downlink connection is a connection from a service supplier to a client. The downlink connection is between a different service supplier and a client than the uplink connection.

In one embodiment of the invention, the downlink connection is implemented as a connection from one service supplier to many clients.

A one service supplier to many clients downlink connection is used for example for multi-media streaming services.

In a further embodiment, the uplink connection is implemented as a connection from many clients to one service supplier.

Such many clients to one service supplier uplink connections are used for example in the case that a central update unit is used to provide data consistency.

In an embodiment of the invention, wherein a one service supplier many clients downlink connection is implemented, the downlink connection is used for update information, only.

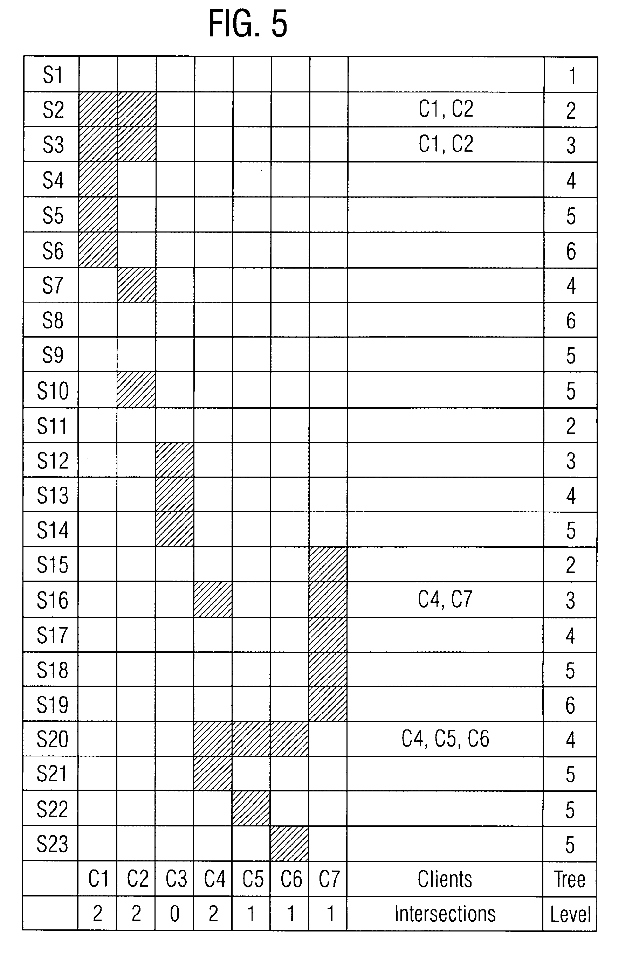

The selection of service suppliers for the set of service suppliers can be performed by using a table. Figure 5 shows a table comprising all clients C1, C2, C3, C4, C5, C6, and C7 and all service suppliers S1, S2, S23, S4, S5, S6, S7, S8, S9, S10, S11, S12, S13, S14, S15, S16, S17, S18, S19, S20, S21, S22, and S23 with a column per client and a row per service supplier in the service distribution tree. At the intersection of a row and a column a mark is set if the respective service supplier is capable of providing the service to the client. A further column comprises an identification of the clients a service supplier can support. In the rightmost column the level of the service supplier within the service distribution tree is indicated. There are several approaches to optimise the selection of service suppliers.

The first one is to use a top down approach. The top down approach starts at the highest level, level 1 of the service distribution tree, and a service supplier found there, capable of serving at least two clients is selected. The other entries and marks of service suppliers serving the client are removed. This method is continued in the respective next lower level until all service suppliers that support at least two clients are selected. Then it is checked, whether all clients are supported. If not, the method stars again at the highest level, this time selecting service suppliers supporting one of the not yet supported clients. After a service supplier is selected, all entries for the respective client are removed. This continues until all clients are supported. By this, each client is supported by the service supplier that is the highest one in the service distribution tree.

Shortcomings of the top down approach are that it does not necessarily lead to the lowest possible number of service suppliers, and that it always leads to a more centralised distribution system.

A further approach is the bottom up approach. Apart form the direction of checks, from the lowest level in the distribution tree to the highest level instead of vice versa, it is performed equally to the top down approach.

Shortcomings of the bottom up approach are that it does not necessarily lead to the lowest possible number of service suppliers, and that it always leads to a distributed distribution system.

Another approach is the maximum number approach. In the maximum number approach the service supplier that can serve the highest number of clients is selected first. Other entries for the clients that can be supported by the selected service supplier are removed. Afterwards the service supplier that serves the second highest number is selected. This is continued until all clients are supported by a service supplier.

This approach leads with the highest probability of all approaches to a minimum number of service suppliers, but there is no information in advance whether service suppliers of a higher or a lower level within the service distribution tree are selected.

The table as shown in figure 5 is not limited to the columns as shown in the figure. Further requirements that are taken into account can lead to further columns in the table.

In another embodiment of the invention, load balancing is taken into account at the selection of service suppliers. This can be performed for example after the selection of service suppliers for the set of service suppliers, and during the selection of service suppliers for each client.

In an embodiment of the invention, a new, additional client requesting the service is served by a new, additional service supplier.

In another embodiment of the invention a new, additional client requesting the service is served by one of the existing service suppliers.

In a preferred embodiment of the invention, the service supplier is selected which is the closest one to the new additional client.

In another embodiment of the invention, the method is executed again when a new additional client requests the service.

In a further embodiment of the invention, the method is performed by a computer program or a software module.

The invention further relates to a computer program, stored on a computer readable medium or loaded into a memory of a computer, adapted to performing a method according to any of the claims 1 to 11. A computer readable medium is any means that stores information and can be read by an input device of a computer, for example a floppy disc, a hard disc, or an optical disc.

## Claims

1. Method for determining a distribution of a service in a network (NW1) comprising a plurality of service suppliers (S1, S2, S3, S4, S5, S6, S7, S8, S9, S10, S11, S12, S13, S14, S15, S16, S17, S18, S19, S20, S21, S22, S23) and a plurality of clients (C1, C2, C3, C4, C5, C6, C7), the service having requirements regarding a communication between a service supplier and a client and requirements on the characteristics of a service supplier and of a client, the method comprising the steps of:
- determining the requirements of the service,
- determining the characteristics of service suppliers and clients
- determining for each client the service suppliers that fulfil the requirements of the service,
- determining a set of service suppliers that can supply the service to the plurality of clients, and
- selecting for each client a service supplier out of the set of service suppliers.

2. Method according to claim 1, with the additional step of generating a service distribution tree (SDT1) that represents a hierarchical structure of service suppliers.

3. Method according to any of the preceding claims with the additional step of determining a simplified distribution tree (SSDT1) by removing service suppliers from branches of the distribution tree that cannot supply at least two clients and wherein the set of service suppliers is determined by using the simplified distribution tree.

4. Method according to any of the preceding claims, wherein the distribution of a service is performed by at least one of a migration, a replication or a partitioning of a service.

5. Method according to any of the preceding claims, wherein the determining of the set of service suppliers is performed according to a predefined policy.

6. Method according to any of the preceding claims with the additional steps of:
- determining the maximum delay permitted among service suppliers,
- determining delays among service suppliers,
that are performed before the determining of the set of service suppliers.

7. Method according the preceding claim with the additional steps of:
- determining a central update unit,
- determining the maximum delay permitted for update purposes,
- determining delays between service suppliers and the central update unit,
that are performed before the determining of the set of service suppliers, wherein no service supplier with a delay higher than the permitted maximum delay is selected for the set of service suppliers.

8. Method according to any of the preceding claims wherein it is distinguished between an uplink, from client to service supplier and a downlink, from service supplier to client, communication in a way that different service suppliers communicate in the uplink and the downlink communication with the client.

9. Method according to any of the preceding claims, wherein the downlink connection is implemented as a streaming of data.

10. Method according to any of the preceding claims, wherein on a downlink connection only update information is transmitted.

11. Method according to any of the preceding claims, wherein a service supplier is one of a sub-network, a server or a proxy server.

12. Computer program, stored on a computer readable medium or in a form that can be loaded into the memory of a computer, adapted to perform a method according to any of the claims 1 to 11.
